# EUROPEAN PATENT APPLICATION

(11) **EP 1 384 940 A2**
(43) Date of publication of application: **28.01.2004**
(21) Application number: 03016701.9
(22) Date of filing: 22.07.2003
(51) Int. Cl.: F17C 1/16, F17C 11/00

(54) **Hydrogen-storage container and method of occluding hydrogen**

(30) Priority: 22.07.2002 JP 2002212987; 22.05.2003 JP 2003145079
(71) Applicant: TOYOTA JIDOSHA KABUSHIKI KAISHA, Aichi-ken 471-8571 (JP); Kabushiki Kaisha Toyota Jidoshokki, Kariya-shi, Aichi-ken 448-8671 (JP)
(72) Inventor: Mori, Daigoro, Toyota-shi, Aichi-ken, 471-8571 (JP); Kimura, Yoshio, Toyota-shi, Aichi-ken, 471-8571 (JP); Nito, Takehiro, Toyota-shi, Aichi-ken, 471-8571 (JP); Kimbara, Masahiko, Kariya-shi, Aichi-ken, 448-8671 (JP); Shinozawa, Tamio, Toyota-shi, Aichi-ken, 471-8571 (JP); Toh, Keiji, Kariya-shi, Aichi-ken, 448-8671 (JP); Kubo, Hidehito, Kariya-shi, Aichi-ken, 448-8671 (JP)
(74) Representative: Leson, Thomas Johannes Alois, Dipl.-Ing.

(57) **Abstract**

A hydrogen-storage container (10) which demonstrates a high hydrogen-storage capacity, which is reduced in mass, and which is suited to be installed in an automobile is provided. In a hydrogen-storage container (10) holding a hydrogen-occlusion alloy (30) in which hydrogen is occluded, an air gap portion (40) formed in the container is filled with hydrogen gas whose pressure is above a plateau equilibrium pressure of hydrogen gas contained in the hydrogen-occlusion alloy (30) at a temperature of a location where the hydrogen-storage container (10) is installed. This hydrogen-storage container (10) has a liner (20) made of metal or resin, and a fiber-reinforced resin layer (25) provided outside the liner (20).

## Description

### BACKGROUND OF THE INVENTION

### 1. Field of the Invention

The invention relates to such a hydrogen-storage container or such a method of occluding hydrogen as makes it possible to significantly enhance a storage amount of hydrogen in comparison with the related art.

### 2. Description of the Related Art

Hydrogen, which does not generate carbon dioxide through combustion, has been drawing attention as clean fuel. Studies on storage, conveyance, and the like of hydrogen have for long been conducted. As a method of storing and conveying hydrogen, high-pressure gas cylinders are generally employed. However, gas cylinders are heavy, demonstrate a practically limited storage capacity per unit volume, and hence have little prospect of substantial enhancement of hydrogen-storage efficiency. It is to be noted in the present specification that hydrogen-storage efficiency refers to a storage amount of hydrogen per unit internal volume of a hydrogen-storage container.

As a method of storing hydrogen with a high hydrogen-storage capacity per unit volume, it has been known to use hydrogen-occlusion alloy. Hydrogen-occlusion alloy is known to be able to store hydrogen more or less at a normal pressure and to store hydrogen with its volume having been reduced to a thousandth of a volume at a normal temperature and a normal pressure. Taking advantage of this feature, hydrogen-occlusion alloy has been employed as a hydrogen-occlusion material for storing and conveying hydrogen more or less at a normal pressure.

Hydrogen-occlusion alloy is known to undergo a major voluminal change through occlusion of hydrogen, more specifically, to expand cubically by approximately 30% through occlusion of hydrogen. In addition, hydrogen-occlusion alloy employed as a hydrogen-storage material is generally available in the form of powder so as to guarantee an enlarged surface area. Even if a hydrogen-occlusion alloy with large particle sizes is used at the outset, it eventually turns into powder due to its expansion and contraction resulting respectively from occlusion and discharge of hydrogen. When the hydrogen-occlusion alloy as powder expands in a hydrogen-storage container during occlusion of hydrogen, the powder lacks fluidity and has little mobility. Thus, a high pressure is applied to some parts of the container, which faces the danger of being destroyed. In consideration of voluminal expansion of hydrogen-occlusion alloy, therefore, a hydrogen-storage container holding hydrogen-occlusion alloy as a hydrogen-occlusion material according to the related art requires the existence of an internal space (hereinafter referred to as an "air gap portion") which is not filled with the hydrogen-occlusion alloy.
Besides, with a view to preventing a high pressure from being applied partially to the container owing to the lack of mobility of the hydrogen-occlusion alloy as powder at the time of voluminal expansion, the required volume of the air gap portion is actually much larger than a volume that is determined simply by taking expansion of hydrogen-occlusion alloy into account. Namely, in general, no more than about 40 to 60% of the internal volume of the hydrogen-storage container can be filled with hydrogen-occlusion alloy. The remaining space, that is, about 60 to 40% of the internal volume of the hydrogen-storage container must be left as the air gap portion. Those skilled in the art have regarded this air gap portion as a space useless for storage of hydrogen and as one of the reasons why the hydrogen-storage density in the hydrogen-storage container cannot be enhanced. It is to be noted in the present specification that the volume of hydrogen-occlusion alloy is based not on bulk density but on true density.

In order to solve the problem stated above, for example, Japanese Published Patent Official Gazette No. 63-10081 discloses a method of efficiently storing and transporting hydrogen. In this method, a hydrogen-storage container is filled with a hydrogen-occlusion alloy in which hydrogen has been occluded in advance, and the ratio of a volume of an air gap portion to an internal volume of the container is thereby reduced significantly. Although this method makes it possible to increase a storage amount of hydrogen per unit internal volume of the hydrogen-storage container, the hydrogen-storage container increases in weight due to an increase in mass resulting from an increase in amount of the hydrogen-occlusion alloy with which the container is to be filled. Therefore, this method is not absolutely suited to be adopted in fields requiring reduction in weight, for example, to be installed in an automobile.

Further, Japanese Patent Application Laid-Open No. 2002-221298 discloses a hydrogen-storage unit comprising a high-pressure hydrogen-storage tank in which hydrogen is stored in a high-pressure gaseous state, in addition to hydrogen storage means in which a hydrogen-occlusion alloy is accommodated. The hydrogen storage means disclosed in this related art, in which the hydrogen-occlusion alloy is accommodated, can store hydrogen at a maximum pressure of 3MPa to 5MPa. According to this related art, however, even if the hydrogen storage means in which the hydrogen-occlusion alloy is accommodated has been increased in pressure, the storable amount of hydrogen does not increase to the extent of matching the increase in pressure. As a counterproductive consequence, the hydrogen storage means increases in weight because of the necessity to ensure pressure resistance. Also, a requirement for sufficient pressure resistance leads to an increase in thickness of walls of a container constituting the hydrogen storage means. This increase in thickness makes it difficult to transfer heat into the hydrogen storage means from the outside. Thus, it takes a long time to supply or store hydrogen. Alternatively, the amount of hydrogen that can be supplied or stored decreases. Still further, the hydrogen storage means is made of aluminum, which is higher in pressure resistance and heat conductivity than resin.

That is, according to the related art based on the following first to fifth standpoints, hydrogen gas, which is at a pressure equal to or somewhat higher than a plateau equilibrium pressure of hydrogen gas contained in a hydrogen-occlusion alloy at a hydrogen-occlusion temperature, is introduced into a hydrogen-storage container made of aluminum so as to be occluded into the hydrogen-occlusion alloy. The first standpoint is that it is desirable to handle high-pressure gas in a hydrogen-storage container employing a hydrogen-occlusion alloy. The second standpoint is that even if the hydrogen-storage container has been filled with hydrogen whose pressure is above a plateau equilibrium pressure, the amount of hydrogen to be stored into the hydrogen-occlusion alloy does not increase significantly. The third standpoint is that an increase in pressure of the hydrogen storage means in which the hydrogen-occlusion alloy is accommodated leads to an increase in weight of the hydrogen storage means because of the necessity to ensure pressure resistance. The fourth standpoint is that a requirement for sufficient pressure resistance leads to an increase in thickness of the walls of the container constituting the hydrogen storage means, that this increase in thickness makes it difficult to transfer heat into the heat storage means from the outside, and that an increase in the time required for filling the container with hydrogen or a decrease in the storable amount of hydrogen is thereby caused. The fifth standpoint is that the hydrogen storage means is preferably made of aluminum, which is higher in pressure resistance and heat conductivity than resin.

Hence, there is a limit imposed on previously known methods of storing hydrogen by means of a hydrogen-occlusion alloy or previously known hydrogen-storage containers employing a hydrogen-occlusion alloy. That is, some of them are designed to store and transport hydrogen with its pressure being held equal to or below a plateau equilibrium pressure of hydrogen gas contained in a hydrogen-occlusion alloy, while being tuned such that the plateau equilibrium pressure is confined to a range of 0MPa to 1MPa (a gauge pressure) at a normal pressure, for the purpose of preventing hydrogen from being stored at a high pressure. The others are designed to store hydrogen in a hydrogen-storage container made of an aluminum alloy at a pressure slightly higher than a plateau pressure. This is based on the concepts of making the most of the characteristic of a hydrogen-occlusion alloy, namely, its ability to occlude hydrogen even around a normal pressure, avoiding the necessity to handle the hydrogen-storage container as a high-pressure container, and exploiting heat conductivity of metals such as aluminum alloys.

### SUMMARY OF THE INVENTION

It is an object of the invention to provide a hydrogen-storage container which demonstrates a high hydrogen-storage capacity through use of a hydrogen-occlusion alloy, which is reduced in weight, and which is suited to be installed in an automobile or the like.

A hydrogen-occlusion container holding therein a hydrogen-occlusion alloy in which hydrogen is occluded in accordance with one aspect of the invention is characterized by comprising a liner which is designed as an inner lining made of metal or resin, a fiber-reinforced resin layer provided outside the liner, and an air gap portion which exists inside the liner and which is filled with hydrogen gas whose pressure is above a plateau equilibrium pressure of hydrogen gas inherent in the hydrogen-occlusion alloy at a temperature of a location where the hydrogen-occlusion container is installed.

According to the aforementioned aspect, the efficiency in storing hydrogen can be enhanced significantly through vigorous utilization of the air gap portion which is regarded as a useless space according to the related art, and the mass of the entire container can be inhibited to the utmost from increasing so that the container can be installed in an automobile. That is, while the liner can prevent hydrogen gas from leaking from the inside of the container, the fiber-reinforced resin layer can reinforce the container such that the container develops a resistance to high-pressure gas sealed therein, without increasing the weight or volume of the container.

Further, a heat exchanger and a heat-buffering substance disclosed in Japanese Patent Application Laid-Open No. 10-194701 exist in the liner. The heat-buffering substance has a melting point ranging from -10°C to 100°C and is selected, for example, from a group consisting of water, cyclohexane, benzene, p-xylene, biphenyl, diphenylmethane, and triphenylmethane.

According to this aspect of the invention, the container is resistant to high pressures, which leads to a decrease in heat conductivity of walls of the container. Even in the case where heat exchange from the outside of the container is difficult, the required amount of heat to be supplied to or removed from a system during occlusion or discharge of hydrogen can be reduced at least either by carrying out heat exchange required for occlusion or discharge of hydrogen by means of the heat exchanger in the container, or by utilizing latent heat while generation of heat resulting from occlusion of hydrogen causes fusion of the heat-buffering substance or while absorption of heat resulting from discharge of hydrogen causes coagulation of the heat-buffering substance.

Furthermore, the pressure of hydrogen with which the air gap portion is filled ranges from 25MPa to 50MPa. Thus, a hydrogen-storage container that can be filled with compressed hydrogen whose pressure is within the above-mentioned range is not heavy in particular and is therefore suited to be installed in an automobile. A larger amount of hydrogen can be stored in this hydrogen-storage container in comparison with a case where an air gap portion of a hydrogen-storage container is filled with hydrogen gas whose pressure is more or less equal to a plateau equilibrium pressure that is demonstrated by hydrogen gas contained in a hydrogen-occlusion alloy at a temperature of a location where the hydrogen-storage container is installed.

### BRIEF DESCRIPTION OF THE DRAWINGS

Fig. 1 is a longitudinal sectional view conceptually showing a hydrogen-storage container of the invention.

Fig. 2 is a longitudinal sectional view conceptually showing another hydrogen-storage container of the invention.

Fig. 3 shows a result obtained as to a hydrogen-storage container made of aluminum according to the related art and a hydrogen-storage container made of fiber-reinforced resin according to the invention, by simulating a mass of the hydrogen-storage container (including a mass of a hydrogen-occlusion alloy) required for storage of 1kg of hydrogen against an internal pressure of the hydrogen-storage container.

Fig. 4 shows a result obtained as to the hydrogen-storage container made of aluminum according to the related art and the hydrogen-storage container made of fiber-reinforced resin according to the invention, by simulating a volume of the hydrogen-storage container required for storage of 1kg of hydrogen against an internal pressure of the hydrogen-storage container.

### DETAILED DESCRIPTION OF PREFERRED EMBODIMENTS

A hydrogen-storage container of the invention, which employs a hydrogen-occlusion alloy, is conceptually quite different from a previously devised hydrogen-occlusion container for storing and conveying hydrogen more or less at a normal pressure. The concept of the invention does not persist in storing hydrogen more or less at a normal pressure, and aims, as described above, at significantly enhancing hydrogen-storage efficiency through vigorous utilization of an air gap portion in a hydrogen-storage container which is regarded as useless according to the related art, and at inhibiting to the utmost an increase in the mass of the entire container so that the container can be installed in an automobile. The hydrogen-storage container of the invention has been completed as a result of extensive studies.

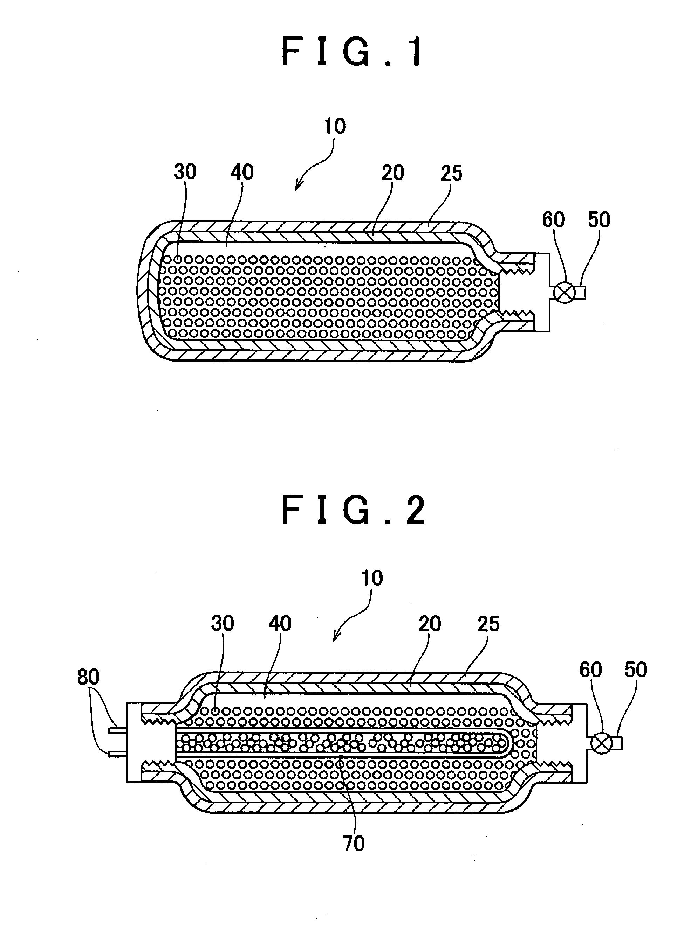

Although Fig. 1 is a longitudinal sectional view conceptually showing the hydrogen-storage container of the invention, the invention is not limited to the construction illustrated in Fig. 1.

A hydrogen-storage container 10 of the invention has a liner 20 made of metal or resin, and a fiber-reinforced resin layer 25 provided outside the liner 20. The hydrogen-storage container 10 contains a hydrogen-occlusion alloy 30, in which hydrogen is occluded. An air gap portion 40 in the container is filled with hydrogen gas (hereinafter referred to as "compressed hydrogen") whose pressure is above a plateau equilibrium pressure of hydrogen gas contained in the hydrogen-occlusion alloy. It is to be noted herein that the liner 20 made of metal or resin is thick enough to prevent leakage of hydrogen gas from the container. For instance, for a hydrogen pressure of 25MPa, it is appropriate that a linear made of aluminum have a thickness of 3mm to 20mm. The fiber-reinforced resin layer 25 is resistant to a high pressure of hydrogen gas filling the inside thereof. In addition, an inlet/outlet port 50 for hydrogen gas and a valve 60 for controlling inflow and outflow of hydrogen gas are illustrated in Fig. 1. However, these components are exemplary ones, which can be replaced with another unit or be additionally equipped with still another unit (not shown) if necessary. The above-mentioned "plateau equilibrium pressure" refers to an equilibrium pressure in a plateau region. The "plateau region" refers to a compositional region in which a metal phase α of a hydrogen-occlusion alloy and a hydride phase β coexist. The "equilibrium pressure" refers to a hydrogen gas partial pressure that exists in a space surrounding a hydrogen-occlusion alloy when occlusion of hydrogen into the hydrogen-occlusion alloy is balanced with discharge of hydrogen therefrom, between the hydrogen-occlusion alloy in which hydrogen is occluded and hydrogen gas in the space surrounding the hydrogen-occlusion alloy. The equilibrium pressure changes depending on a type of the hydrogen-occlusion alloy or a temperature thereof.

Fig. 2 is a longitudinal cross-sectional view conceptually showing another hydrogen-storage container of the invention. As in the case of the hydrogen-storage container of the invention illustrated in Fig. 1, a hydrogen-storage container of the invention illustrated in Fig. 2 has a liner 20 made of metal or resin, and a fiber-reinforced resin layer 25 provided outside the liner 20. The hydrogen-storage container 10 contains a hydrogen-occlusion alloy 30, in which hydrogen is occluded. An air gap portion 40 in the container is filled with hydrogen gas whose pressure is above a plateau equilibrium pressure of hydrogen gas contained in the hydrogen-occlusion alloy. In addition, an inlet/outlet port 50 for hydrogen gas and a valve 60 for controlling inflow and outflow of hydrogen gas are illustrated in Fig. 2. However, these components are exemplary ones, which can be replaced with another unit or be additionally equipped with still another unit (not shown) if necessary. In addition to those components, a heat exchanger 70 is illustrated in Fig. 2. The heat exchanger has a heating medium inlet/outlet port 80 and is disposed inside the hydrogen-storage container. The heat exchanger 70 illustrated in Fig. 2 has a U-shaped cross-section and is constructed as a metal pipe, for example, as an aluminum pipe. A heating medium such as water is caused to flow through the pipe, whereby the heat exchanger 70 exchanges heat with the hydrogen-occlusion alloy 30. In this manner, the hydrogen-occlusion alloy reaches a temperature required for occlusion or discharge of hydrogen. Incidentally, the heat exchanger 70 may be of any type. For example, it is appropriate that the heat exchanger 70 be constructed as a meander pipe, a component having fins, or the like.

Hereinafter, respective portions of the hydrogen-storage container of the invention will be described.

The hydrogen-storage container 10 of the invention has the liner 20 made from a resin or a metal such as aluminum, and the fiber-reinforced resin layer 25 provided outside the liner 20. In particular, a container having glass-fiber-reinforced resin laminated on an outer surface of a steel liner, a container having glass-fiber-reinforced resin or carbon-fiber-reinforced resin laminated on an outer surface of an aluminum liner, a container having a carbon-fiber-reinforced resin layer laminated on an outer surface of a resin liner layer, or a container having carbon fiber and glass-fiber-reinforced resin laminated on an outer surface of a resin liner is preferable because of its superiority in strength and safety. It is appropriate that these hydrogen-storage containers be cylindrical in shape.

Any hydrogen-occlusion alloy can be used as the hydrogen-occlusion alloy 30 held in the hydrogen-storage container 10. It is preferable, however, to use at least one alloy of a type that is selected, for example, from a lanthanum-nickel type, a misch metal-nickel type, a lanthanum-nickel-aluminum type, a misch metal-nickel-aluminum type, a misch metal-nickel-aluminum-cobalt type, a misch metal-nickel-aluminum-manganese type, a misch metal-nickel-manganese-aluminum-cobalt type, a calcium-nickel-misch metal-aluminum type, a titanium-iron type, a titanium-iron-manganese type, an iron-titanium-iron oxide-titanium oxide type, a titanium-iron-nickel-vanadium type, a titanium-iron-nickel-zirconium type, a titanium-cobalt type, a titanium-cobalt-iron-zirconium type, a titanium-nickel type, a titanium-manganese type, a titanium-chromium type, a titanium-zirconium-chromium-manganese type, a titanium-chromium-manganese type, a zirconium-titanium-iron-vanadium-chromium type, a magnesium-nickel type, a zirconium-manganese type, a zirconium-vanadium type, a zirconium-iron type, a calcium-nickel type, a titanium-chromium-vanadium type, and a titanium-chromium-vanadium-nickel type. Furthermore, it is possible to use hydrogen-occlusion alloy powder in which ultrafine particles of various metals are dispersed in an Mg matrix disclosed in Japanese Patent Application Laid-Open No. 2002-53926. It is especially preferable that the hydrogen-occlusion alloy employed in the invention have a plateau region at a temperature of 0°C to 80°C. In particular, it is preferable to use at least one hydrogen-occlusion alloy of a type that is selected from a lanthanum-nickel type, a misch metal-nickel type, a titanium-chromium-manganese type, a titanium-chromium-vanadium type, and a titanium-chromium-vanadium-nickel type.

A hydrogen-occlusion alloy of any shape can be used for the hydrogen-storage container 10 of the invention. However, the use of powder is especially preferred because of its capability to enlarge a surface area of the hydrogen-occlusion alloy and to increase a rate at which hydrogen is occluded or discharged. Further, it is known that even though a hydrogen-occlusion alloy is a lump of a certain size at the outset, it gradually turns into powder due to expansion or contraction resulting from occlusion or discharge of hydrogen.

It is preferable that a hydrogen-occlusion alloy be contained in the hydrogen-storage container 10 of the invention such that a ratio (hereinafter referred to as an "air gap ratio") of a volume of the air gap portion 40 to an internal volume ranges from 60% to 40% when no hydrogen is occluded. If the air gap ratio is further reduced, the hydrogen-occlusion alloy expands by occluding hydrogen. Thus, a high pressure may be applied to some parts of the hydrogen-storage container. On the other hand, a further increase in the air gap ratio is not preferred because the amount of storable hydrogen is reduced.

In the case where hydrogen is stored in the hydrogen-storage container 10, hydrogen is occluded into the hydrogen-occlusion alloy 30 contained in the hydrogen-storage container by filling the inside thereof with hydrogen gas. For occlusion of hydrogen, it is preferable to use compressed hydrogen. It is preferable that compressed hydrogen to be introduced into the hydrogen-storage container during occlusion of hydrogen according to the invention be at a pressure equal to or higher than 25MPa. By introducing compressed hydrogen into the hydrogen-storage container, hydrogen can be occluded into the hydrogen-occlusion alloy at a much faster rate in comparison with a case where occlusion of hydrogen is carried out using hydrogen gas whose pressure is more or less equal to a plateau equilibrium pressure of the hydrogen-occlusion alloy during occlusion of hydrogen.

According to the invention, while hydrogen is occluded into the hydrogen-occlusion alloy 30 contained in the hydrogen-storage container, the air gap portion 40 in the hydrogen-storage container is filled with compressed hydrogen. According to the related art, the hydrogen-storage container holding the hydrogen-occlusion alloy is prevented from being filled with hydrogen gas whose pressure is equal to or higher than 1MPa. In the hydrogen-storage container of the invention, however, it is preferable that the pressure of compressed hydrogen with which the container is to be filled range from 1MPa to 70MPa, especially, from 25MPa to 50MPa. A hydrogen-storage container that can be filled with compressed hydrogen whose pressure is within the above-mentioned range is not heavy in particular and is therefore suited to be installed in an automobile. A larger amount of hydrogen can be stored in this hydrogen-storage container in comparison with a case where an air gap portion of a hydrogen-storage container is filled with hydrogen gas whose pressure is more or less equal to a plateau equilibrium pressure that is demonstrated by hydrogen gas contained in a hydrogen-occlusion alloy at a temperature of a location where the hydrogen-storage container is installed.

A hydrogen-occlusion alloy generates heat when occluding hydrogen, and absorbs heat when discharging hydrogen. In general, therefore, means for preventing a hydrogen-storage container from being excessively heated by heat that is generated by the hydrogen-occlusion alloy during occlusion of hydrogen and for preventing a fall in hydrogen-discharge rate from being caused by absorption of heat during discharge of heat are required. Such means include the use of a heat exchanger, a method of filling the inside of a hydrogen-storage container with a heat-buffering substance disclosed in Japanese Patent Application Laid-Open No. 10-194701, and the like. It is preferable that a heat exchanger be attached to the hydrogen-storage container of the invention. It is especially preferable that a heat exchanger be provided in the hydrogen-storage container.

Moreover, the hydrogen-storage container 10 of the invention requires components and the like for ensuring safety or the like in addition to components for filling the hydrogen-storage container with hydrogen gas and taking hydrogen out therefrom, such as a valve, a joint, and the like. If necessary, it is possible to adopt known technologies that have for long been applied to hydrogen-storage containers, high-pressure gas cylinders, and the like.

A hydrogen-storage container has been constructed by filling a pressure-resistant container having an internal volume of 1.2L with 2.88kg of a misch-metal-type hydrogen-occlusion alloy having a true density of 6g/cm³, a bulk density of 2.4g/cm³, and a hydrogen-occlusion capacity of 1 mass percent at a temperature of 25°C. Calculations based on the true density of the hydrogen-occlusion alloy used herein indicate that the inside of the container has an occupied volume of 0.48L, that an air gap portion in the container has a volume of 0.72L, and that the air gap occupies 60% of the container.

At a normal temperature, hydrogen gas has been introduced into the above-mentioned hydrogen-storage container, and hydrogen has been occluded into the hydrogen-occlusion alloy. After the completion of occlusion of hydrogen, the hydrogen-storage container has been filled with additional hydrogen gas which is at a pressure of 50MPa.

After the hydrogen-storage container has been filled with additional hydrogen gas at the pressure of 50MPa, the amount of hydrogen stored in the hydrogen-storage container is 1.94 times as large as the amount of hydrogen that is stored in the hydrogen-storage container when the air gap portion in the container has a hydrogen pressure of 0.3MPa, namely, a plateau equilibrium pressure for hydrogen gas contained in the hydrogen-occlusion alloy in which hydrogen has been occluded.

Further, as for the hydrogen-storage container made of aluminum according to the related art and the hydrogen-storage container made of fiber-reinforced resin (FRP) according to the invention, a mass and a volume of the container required for storage of 1kg of hydrogen have been simulated against an internal pressure of the hydrogen-storage container. This simulation is carried out on the following conditions:
(a) that the hydrogen-storage container have a ratio L/D of 3 (L and D represent axial length and diameter of a tank, respectively);
(b) that the hydrogen-occlusion alloy demonstrate a hydrogen-occlusion capacity of 2 mass percent;
(c) that 40% of the hydrogen-storage container be filled with the hydrogen-occlusion alloy when no hydrogen is occluded therein; and
(d) that the temperature be equal to a room temperature (20°C to 25°C).

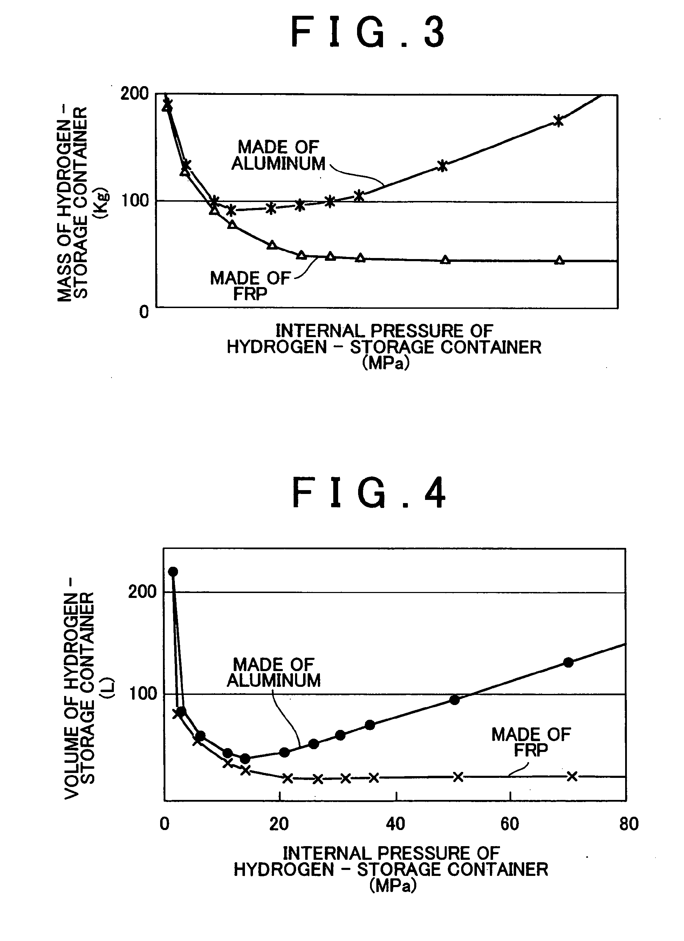

The result of this simulation is illustrated in Figs. 3 and 4. As is apparent from Fig. 3, which shows the result of the simulation of a mass of the hydrogen-storage container (including a mass of the hydrogen-occlusion alloy) required for storage of 1kg of hydrogen against an internal pressure of the hydrogen-storage container, the required thickness of the hydrogen-storage container made of aluminum increases through an increase in pressure. Hence, the mass of the container increases as well. On the other hand, it has been revealed that the mass of the container made of fiber-reinforced resin according to the invention does not increase through an increase in pressure and that the container of the invention is suited for storage of hydrogen above a plateau pressure. Substantially the same result as in Fig. 3 is also apparent from Fig. 4, which shows a result of a simulation of a volume of the hydrogen-storage container required for storage of 1kg of hydrogen against an internal pressure of the hydrogen-storage container.

In a hydrogen-storage container holding a hydrogen-occlusion alloy in which hydrogen is occluded, an air gap portion in the container is filled with compressive hydrogen, whereby it becomes possible to store a large amount of hydrogen in addition to occlusion of hydrogen by the hydrogen-occlusion alloy. Furthermore, the hydrogen-storage container of the invention ensures an increased storage amount of hydrogen by utilizing the air gap portion formed therein. Therefore, in comparison with a method of increasing a storage amount of hydrogen by increasing an amount of the hydrogen-occlusion alloy, the storage amount of hydrogen can be increased significantly while the mass of the container is hardly increased. As a result, the hydrogen-storage container of the invention is also suited to be installed in an automobile, whose components must be reduced in weight as a prime requirement.

A hydrogen-storage container (10) which demonstrates a high hydrogen-storage capacity, which is reduced in mass, and which is suited to be installed in an automobile is provided. In a hydrogen-storage container (10) holding a hydrogen-occlusion alloy (30) in which hydrogen is occluded, an air gap portion (40) formed in the container is filled with hydrogen gas whose pressure is above a plateau equilibrium pressure of hydrogen gas contained in the hydrogen-occlusion alloy (30) at a temperature of a location where the hydrogen-storage container (10) is installed. This hydrogen-storage container (10) has a liner (20) made of metal or resin, and a fiber-reinforced resin layer (25) provided outside the liner (20).

## Claims

1. A hydrogen-occlusion container (10) holding therein a hydrogen-occlusion alloy (30) in which hydrogen is occluded, **characterized by** comprising:
a liner (20) which is designed as an inner lining made of metal or resin;
a fiber-reinforced resin layer (25) provided outside the liner (20); and
an air gap portion (40) which exists inside the liner (20) and which is filled with hydrogen gas whose pressure is above a plateau equilibrium pressure of hydrogen gas inherent in the hydrogen-occlusion alloy (30) at a temperature of a location where the hydrogen-occlusion container (10) is installed.

2. The hydrogen-occlusion container (10) according to claim 1, **characterized by** further comprising:
a heat exchanger (70) which is located in the liner (20).

3. The hydrogen-occlusion container (10) according to claim 2, **characterized in that**
the heat exchanger (70) is an aluminum pipe through which water flows.

4. The hydrogen-occlusion container (10) according to claims 1 to 3, **characterized by** further comprising:
a substance which exists in the liner (20) and which has a melting point ranging from -10°C to 100°C.

5. The hydrogen-occlusion container (10) according to claims 1 to 4, **characterized in that**
hydrogen gas with which the air gap portion (40) is filled is at a pressure ranging from 25MPa to 50MPa.

6. The hydrogen-occlusion container (10) according to claims 1 to 5, **characterized in that**
a ratio of a volume of the air gap portion (40) to an internal volume of the liner ranges from 60% to 40% when no hydrogen is occluded in the hydrogen-occlusion alloy (30).

7. A method of occluding hydrogen into a hydrogen-occlusion container (10) in which a hydrogen-occlusion alloy (30) is accommodated, **characterized by** comprising the steps of:
introducing hydrogen gas whose pressure is above a plateau equilibrium pressure of hydrogen gas inherent in a hydrogen-occlusion alloy (30) at a temperature of a location where the hydrogen-storage container (10) is installed, into the hydrogen-occlusion container (10); and
causing the hydrogen-occlusion alloy (30) to occlude hydrogen while filling an air gap portion (40) formed in the hydrogen-occlusion container (10) with the hydrogen gas.
